# EUROPEAN PATENT APPLICATION

(11) **EP 3 557 186 A2**
(43) Date of publication of application: **23.10.2019**
(21) Application number: 19151694.7
(22) Date of filing: 14.01.2019
(51) Int. Cl.: G01C 23/00, G01C 21/36, G06F 3/0488, B64D 43/00, B60K 37/06

(54) **ELECTRONICALLY DAMPED TOUCHSCREEN DISPLAY**

(30) Priority: 16.04.2018 US 201815954281
(71) Applicant: Bell Helicopter Textron Inc., Fort Worth, TX 76101 (US)
(72) Inventor: CHAVEZ, Jeremy Robert, Colleyville, TX 76034 (US); KIHARA, Steven Wayne, North Richland Hills, TX 76182 (US)
(74) Representative: Barker Brettell LLP

(57) **Abstract**

Embodiments are directed to systems and methods for interacting with a touch-sensitive display (101, 201, 301) in a vehicle. The display (101, 201, 301) shows one or more objects (102, 202, 203, 208, 307, 308). Vehicle motion is detected. The position of at least one object (102, 202, 203, 208, 307, 308) on the touch-sensitive display (101, 201, 301) is based upon the vehicle motion. User (309) touches on the touch-sensitive display (101, 201, 301) may be detected, and tactile feedback may be provided to the user via a glove. In a further embodiment, an imminent input to the touch-sensitive display (101, 201, 301) may be detected, and the target point (209) for the imminent input may be determined. The display (101, 201, 301) may be zoomed around the target point (209) to expand at least a portion of a targeted object. The vehicle may be an aircraft, and the targeted object may be a virtual flight instrument (307). The target point (209) may also be displayed on the touch-sensitive display (101, 201, 301).

## Description

### TECHNICAL FIELD

This invention relates generally to display systems in aircraft, and more particularly, to compensating for aircraft motion, vibration, and turbulence when aircrew interact with such displays.

### BACKGROUND

All aircraft, whether fixed-wing, helicopter, or tilt-rotor, have flight instruments that present information about the aircraft's current state or position to aircrew. The type, arrangement, and number of flight instruments vary depending upon the aircraft type and mission. The flight instruments will generally include at least basic pitot-static instruments (e.g., airspeed indicator, altimeter, vertical speed indicator) and gyroscopic instruments (e.g., attitude indicator, heading indicator, turn coordinator). Originally, aircraft flight instruments were mechanical dials and gauges that provided an analog display to aircrew. The analog flight instrument configuration evolved into the modem "glass cockpit" in which the mechanical flight instruments are replaced with digital flight instrument displays. Typically, liquid-crystal display (LCD) panels are used to show the information presented by traditional mechanical instruments. Some flight instrument configurations include LCD panels that are dedicated to display a digital version of a replaced mechanical instrument. In other configurations, the LCD panels may be multi-function displays (MFD) that can display various flights instruments as selected by aircrew.

### SUMMARY

In one embodiment, a vehicle display system comprises a touch-sensitive display, a vehicle movement sensor, and a display driver configured to generate one or more objects displayed on the touch-sensitive display, wherein a position of at least one object on the touch-sensitive display is adjusted based upon motion detected by the vehicle movement sensor. The vehicle may be an aircraft, and the at least one object may be a virtual flight instrument. The vehicle movement sensor may be an accelerometer, for example. The vehicle display may further comprise a display sensor configured to detect a target point for an imminent input on the touch-sensitive display. The display driver is configured to generate a zoomed display around the target point. The target point may overlap a targeted object on the touch-sensitive display, and at least a portion of the targeted object may be expanded on the display. The display driver may also be configured to display the target point on the touch-sensitive display.

In another embodiment, a method for interacting with a display comprises displaying one or more objects on a touch-sensitive display in a vehicle, detecting motion of the vehicle, and adjusting the position of the at least one object on the touch-sensitive display based upon the vehicle motion. The method may further comprise displaying an object on the touch-sensitive display at an initial position, moving the object to a second position in response to the vehicle motion, and moving the object to the original position from the second position after the vehicle motion stops. The method may further comprise detecting when a user touches the touch-sensitive display, and providing tactile feedback to the user via a glove.

In a further embodiment, a method controlling a display comprises displaying one or more objects on a touch-sensitive display in a vehicle, detecting an imminent input to the touch-sensitive display, determining a target point on the touch-sensitive display for the imminent input, and zooming the display around the target point. The target point may overlap a targeted object on the touch-sensitive display, and a zoomed portion of the display may comprise at least a portion of the targeted object. The vehicle may be an aircraft, and the targeted object may be a virtual flight instrument. The method may further comprise displaying the target point on the touch-sensitive display. The imminent input may correspond to an input device coming within a predefined proximity to the touch-sensitive display. The input device may be, for example, a user finger, a user fingertip, a user hand, and a stylus.

### BRIEF DESCRIPTION OF THE DRAWINGS

Having thus described the invention in general terms, reference will now be made to the accompanying drawings, which are not necessarily drawn to scale, and wherein:
FIGs. 1A-C illustrate a crew member interacting with a single-screen instrument panel in an aircraft according to one embodiment.
FIGs. 2A-B illustrate a crew member interacting with a single-screen instrument panel in an aircraft according to another embodiment.
FIG. 3 is a high-level block diagram of a system for controlling the objects displayed on a single-screen instrument panel in an aircraft according to one embodiment.
FIG. 4 is an example schematic of a computer system in accordance with some embodiments.

While the system of the present application is susceptible to various modifications and alternative forms, specific embodiments thereof have been shown by way of example in the drawings and are herein described in detail. It should be understood, however, that the description herein of specific embodiments is not intended to limit the system to the particular forms disclosed, but on the contrary, the intention is to cover all modifications, equivalents, and alternatives falling within the spirit and scope of the present application as defined by the appended claims.

### DETAILED DESCRIPTION

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

In future generation aircraft, the mechanical instruments and MFDs found in current aircraft may be replaced with a wide, single-screen instrument panel that provides a touchscreen interface for aircrew. The single-screen instrument panel will behave like a tablet computer accepting well-known user gestures, such as pinch-zoom and finger-swipe inputs. Aircrew may select what information should be displayed on the single-screen instrument panel, such as flight instruments, engine instruments, navigation displays, communication interfaces, etc. The aircrew may also select the layout of the display, such as by adjusting the size and position of each instrument and interface. This would allow aircrew to select different instrument panel displays for different missions, weather conditions, or flight stages.

Interaction with a touchscreen interface in an aviation environment may be difficult since aircrew are subject to vibration, turbulence, and g-forces during flight. Such effects cause aircrew to move unexpectedly, and these movements are difficult to anticipate. If unexpected environmental forces are imposed on aircrew while they are trying to use a touchscreen instrument panel, the aircrew may miss an intended input or may unintentionally select an undesired command. These problems may be accentuated by the lack of tactile feedback inherent in current touchscreens. For example, an aircrewman wearing gloves and pressing on a flat screen might not have a high confidence level as to what input was selected and/or if an input was selected at all.

In one embodiment, information displayed on a single-screen instrument panel is coupled to the movement of a crew member's hand. The visual display may be digitally dampened so it has a slight float on the screen relative to a background image. A glove or finger may trigger a target point on the screen to identify the area being selected. A target area may be enlarged when the crew member's finger is near the touchscreen. The target area may track the projected target point to dampen any inadvertent and significant hand movement. Tactile feedback may be incorporated within a crew member's glove to confirm a selection or finger press.

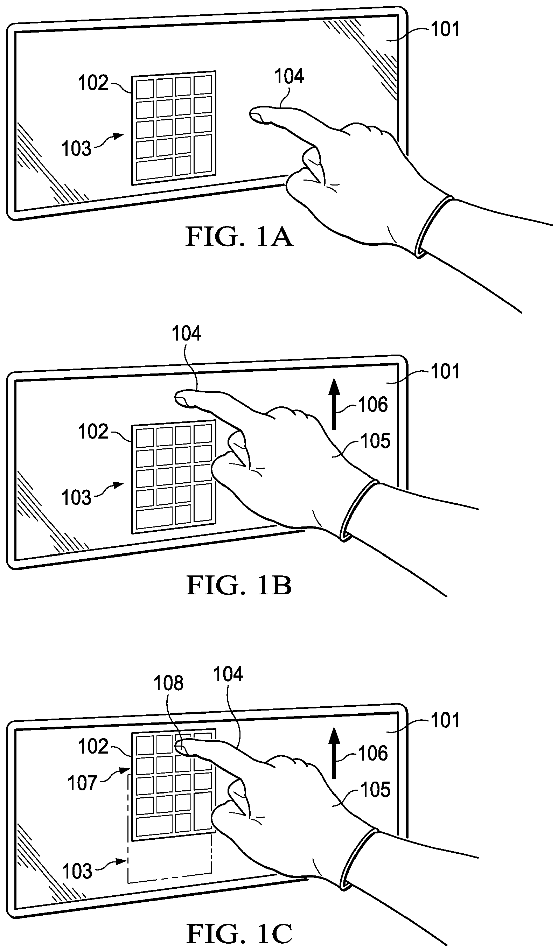

FIGs. 1A-C illustrate a user, such as a crew member, interacting with a single-screen instrument panel 101 in an aircraft according to one embodiment. Single-screen instrument panel 101 is a display, such as an LCD panel, that can be used to show images of flight instruments, aircraft data, icons, or any other information. The objects displayed on instrument panel 101 may be located at default positions or in user-selected positions. The user may move the displayed objects to different positions on instrument panel 101 and/or may resize the objects as desired. Single-screen instrument panel 101 is also a touchscreen that allows the user to provide manual inputs by touching panel 101 directly with a body part (e.g., finger, knuckle, palm) or indirectly with another device (e.g., stylus, pen, glove). Instrument panel 101 accepts taps, presses, or other user gestures (e.g., pinch-zoom, finger-swipe) as inputs. Instrument panel 101 may use any appropriate sensing technology employed in touchscreens, such as resistive, capacitive, Surface Acoustic Wave (SAW), infrared optical imaging, electromagnetic induction, and the like. However, some of these sensing methods may be less optimal if the user is wearing a glove or using a stylus to touch the screen.

In FIG. 1A, a virtual keypad 102 is displayed on instrument panel 101. Keypad 102 is located at an initial position 103, which may be selected by the user or may be a default location. The user may press the virtual keys on keypad 102 to enter data for an aircraft system, such as to enter navigation coordinates or radio frequencies, using a finger 104. Under normal operating conditions, this is a simple task that requires minimal hand-eye coordination, such as the user moving his finger 104 forward to touch virtual keypad 102 on instrument panel 101.

FIG. 1B illustrates the effects induced on a user's hand 105 and finger 104 by movement of the aircraft. The user's hand 105 and finger 104 have been forced upward 106 relative to virtual keypad 102 on instrument panel 101. This motion 106 may be cause, for example, by turbulence or negative g-forces that cause the aircraft to drop or descend suddenly. As the aircraft moves, the instrument panel 101 will move too, but the user's hand 105 and finger 104 are subject to delayed motion since they are not directly attached to the aircraft. Because of the aircraft-induced motion, when the user moves his hand 105 forward toward the instrument panel 101, finger 104 is no longer aimed at keyboard 102. Instead, in FIG. 1B, the aircraft-induced motion causes finger 104 to unintentionally touch instrument panel 101 at a location above virtual keypad 102. Depending upon the degree and direction of the aircraft-induced motion, the user's finger 104 may unintentionally touch almost any location on instrument panel 101. A small amount of aircraft-induced motion may cause the user's finger 104 to touch the wrong key on virtual keypad 104. On the other hand, a large amount of aircraft-induced motion may cause the user's finger 104 to completely miss virtual keypad 104 and/or to unintentionally select inputs on other virtual instruments on instrument panel 101.

FIG. 1C illustrates modifications to the display on instrument panel 101 to compensate for the effects induced by aircraft movement. Although the user's hand 105 and finger 104 have been forced upward 106 relative to instrument panel 101, virtual keypad 102 has also moved upward in FIG. 1C. Keypad 102 was initially at position 103. When excessive aircraft motion is detected, the display system moves keypad 102 to new position 107. The new position 107 may be selected or predicted based upon the amount of actual or expected movement 106 in the user's hand 105 and/or finger 104. This allows the user's finger 104 to stay aligned with keypad 102 even though external forces, such as turbulence or g-forces, are moving the user's hand 105 relative to instrument panel 101. As a result, when the user's finger 104 touches instrument panel 101, keypad 102 is under the user's fingertip and the desired input will be selected.

In one embodiment, a background image, such as a picture, pattern, or color, may be displayed on instrument panel 101. The flight instruments and other information are displayed on instrument panel 101 so that they appear to be floating relative to the background and/or so that they appear to be closer to the user relative to the background. The background image does not move when aircraft motion is detected; however, the flight instruments and other instruments may move relative to the background image (as well as relative to instrument panel 101) when compensating for aircraft movement.

In one embodiment, the entire display on instrument panel 101 is moved to compensate for aircraft motion. In other embodiments, sensors or detectors (not shown) on or near instrument panel 101 may detect that a particular portion of instrument panel 101 is of interest to the user, such as keypad 102 itself or keypad 102 plus nearby displayed objects on instrument panel 101, and just that portion of the display is moved to compensate for aircraft motion.

The user may wear a glove as shown in FIGs. 1A-C. In one embodiment, the glove may have a sensor or feedback device 108 at the tip of finger 104. Device 108 may provide tactile feedback to the user. For example, when instrument panel 101 detects an input, such as a screen press or tap, a display system may trigger a vibration or other feedback in device 108 to notify the user that the input was detected. Audio feedback, such as clicks or tones, may be provided to the user when inputs are detected on instrument panel 101 in addition to or instead of the tactile feedback.

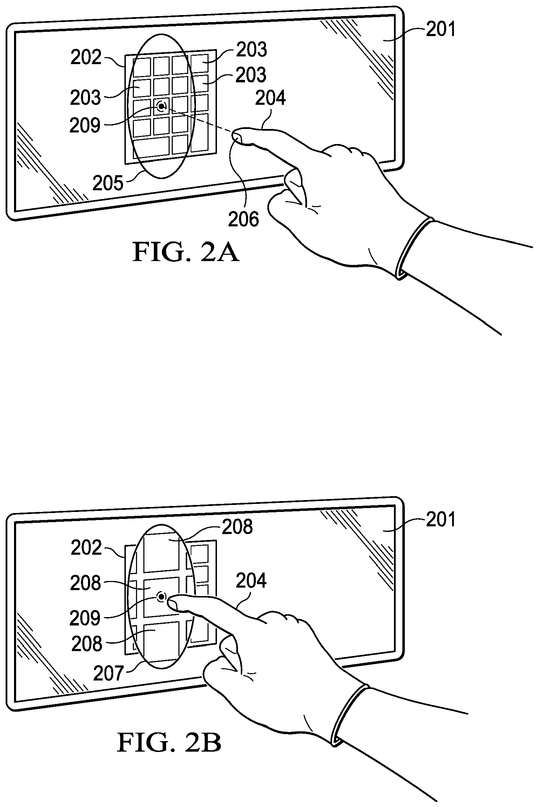

FIGs. 2A-B illustrate a user, such as a crew member, interacting with a single-screen instrument panel 201 in an aircraft according to another embodiment. Single-screen instrument panel 201 is a display screen that can be used to show images of flight instruments, aircraft data, icons, or any other information like instrument panel 101 in FIGs. 1A-C. In addition to the problems caused by aircraft motion as described above, the user may also find it difficult to select a desired input on instrument panel 201 if, for example, the target object is small relative to the user's finger, the target is located in a dense cluster of objects, and/or the user is wearing gloves.

In FIG. 2A, a virtual keypad 202 is displayed on instrument panel 201. The buttons 203 on keypad 202 are positioned close together in a dense grouping. Depending upon how large the individual buttons 203 appear on the instrument panel 201 display, it may be difficult for a user to select a desired button 203 without the user's finger 204 unintentionally selecting another button 203 instead of, or in addition to, the desired button 203. If the user is wearing a glove, this problem may be exacerbated because a larger object (i.e., a gloved finger 204) is being used to select the input and because it may be difficult for the user to tell which part of the gloved fingertip is touching the screen.

These problems may be overcome in one embodiment if instrument panel 201 or a display driver can identify a focus area 205 that the user is beginning to touch. For example, as the user's finger 204 is approaching keypad 202, instrument panel 201 may identify area 205 as the focus area of an imminent touch input. For example, optical sensors (not shown) may detect the approach of finger 204 toward instrument panel 201 before contact occurs. Alternatively, a sensor or detector 206 in the fingertip of the glove may be used to identify the focus area 205.

FIG. 2B illustrates an expanded area 207 on instrument panel 201. Expanded area 207 is magnified or zoomed region of focus area 205. Expanded area 207 provides larger buttons 208 compared to original buttons 203, which makes it easier for the user to accurately select the desired input. Expanded area 207 may be displayed, for example, when the user's finger 204 or other input device is within a predetermined distance of instrument panel 201. Expanded area 207 may overlap and cover the underlying display, such as keypad 202, as shown in FIG. 2B. In other embodiments, expanded area 207 may have a fisheye lens appearance wherein the center of the field of view 207 is magnified with a continuous fall-off in magnification toward the edges so that all of the underlying display can be seen by the user.

A target point 209 may be displayed on instrument panel 201 to indicate the predicted touch point. Target point 209 may be the center of the focus area 205 and/or expanded area 207. If the user moves his finger 204 across instrument panel 201, with or without touching the surface, then target point 209 will move to reflect changes in a predicted touch point. Similarly, if the user moves his finger 204 across instrument panel 201, with or without touching the surface, then focus area 205 and/or expanded area 207 may also move with the finger 204. For example, if the user makes multiple inputs, such as pressing multiple buttons 203 or 208, the touch point 209 and expanded area 207 will move between each button press to follow the user's finger 204.

In some embodiments, the instrument panel on an aircraft may use both the moving display object feature (FIG. 1C) and the expanded area and/or tracking point features (FIGs. 2A-B).

Although a keypad 102 or 202 is used in the examples of FIGs. 1A-C and 2A-B, it will be understood that any object displayed on instrument panel 101 or 201, such as any flight instrument, aircraft data display, input screen, icon, or other information, may be moved to compensate for excessive aircraft motion that may affect the aircrew. Additionally, it will be understood that the improvements described herein will work with any input-selection device employed by the user, such as gloved or bare finger, knuckle, or other body part, or a stylus, pen, or other object.

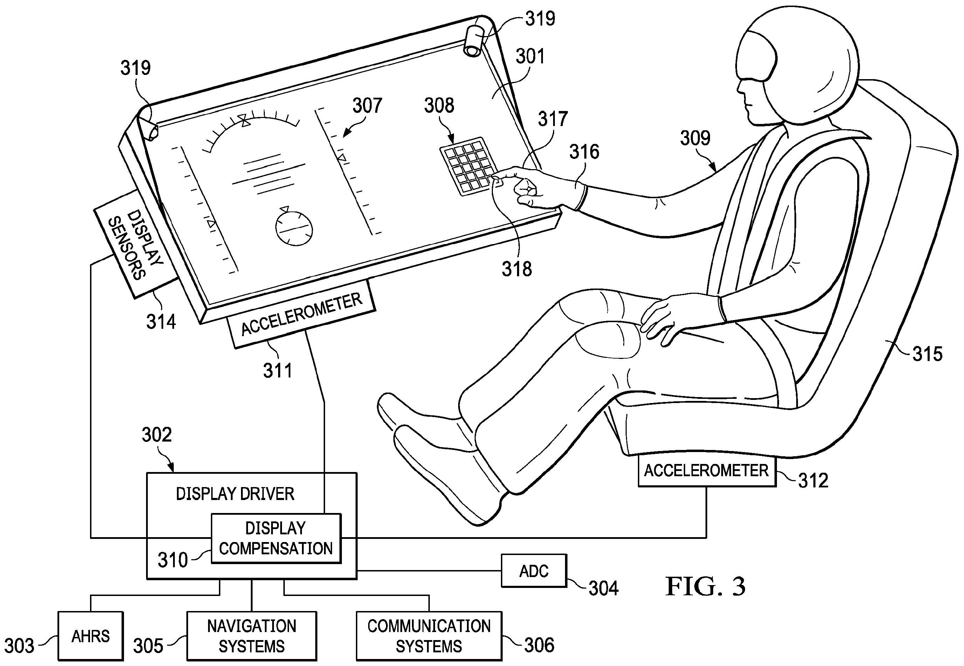

FIG. 3 is a high-level block diagram of a system for controlling the objects displayed on a single-screen instrument panel 301 in an aircraft according to one embodiment. A display driver 302 generates an output that controls the objects displayed on instrument panel 301. Display driver 302 may be a graphics processing unit (GPU), a graphics card, or display driver software running on a processor. Display driver receives inputs directly or indirectly from various aircraft systems, such as attitude-heading reference system (AHRS) 303, air data computer (ADC) 304, navigation systems 305, and communication systems 306. These inputs are used to generate virtual pitot-static and gyroscopic flight instruments 307 as well as other aircraft data displays 308 on instrument panel 301.

As discussed above, aircraft motion may make it difficult at times for a crew member 309 to accurately select a desired input on instrument panel 301. Additionally, it may also be difficult to accurately select a desired input on instrument panel 301 if the crew member is wearing gloves or if the input buttons or objects have a relatively small size. These problems can be overcome by compensating for aircraft motion and other factors.

Display driver 302 includes or is coupled to a display compensation module 310. Sensors, such as accelerometers 311 and/or 312 or display sensors 314, provide inputs to compensation module 310. Accelerometer 311 is positioned at or near instrument panel 301, and accelerometer 312 is positioned at or near the seat 315 for crew member 309. Accelerometers 311 and 312 measure movement of instrument panel 301 and crew member 309 in one or more dimensions and provide movement data to display compensation module 310. In turn, display compensation module 310 provides inputs to display driver 302 that can be used to modify the virtual pitot-static and gyroscopic flight instruments 307 and other aircraft data 308 displayed on instrument panel 301. For example, if the aircraft suddenly descends due to turbulence, this might cause the crew member's hand 316 to rise relative to the objects shown on instrument panel 301. Accelerometers 311 and/or 312 detect this sudden movement and provide movement data (e.g., direction and magnitude) to display compensation module 310. Based upon the direction and magnitude of the aircraft motion, display compensation module 310 provides a compensation signal to display driver 302, which uses the compensation signal to modify the objects 307 and 308 shown on instrument panel 301. Display driver 302 moves the objects 307 and 308 upward on the display by an amount proportional to the aircraft motion, such as shown in FIG. 1C. The position of all objects 307 and 308 may be adjusted in response to aircraft movement, or just one or more of the objects that are closest to the user's finger 317 or hand 316 are adjusted.

Display driver 302 and display compensation 301 may also receive inputs from display sensors 314, which indicate are area of interest on instrument panel 301, such as an area that the crew member's hand 316 or finger 317 is near. Display sensors 314 may be embedded in instrument panel 301 (not shown) and may interact or detect proximity of the crew member's finger 317. For example, a sensor component 318 may be incorporated into the fingertip of the crew member's glove. Alternatively, cameras 319 may be used to detect the crew member's finger 317 and to determine its position relative to objects shown instrument panel 301 using stereo vision. Display driver 302 modifies the display object 308 that is closest to the crew member's finger 317, such as by enlarging that object or a portion of the object as shown in FIG. 2B.

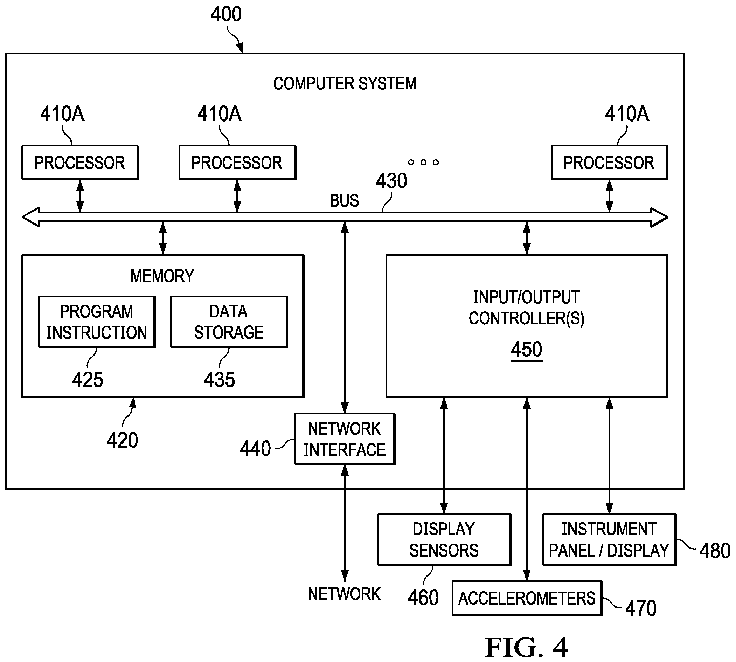

Some embodiments of systems and methods for modifying displays to compensate for aircraft motion, vibration, and turbulence, as described herein, may be implemented or executed, at least in part, by one or more computer systems. One such computer system is illustrated in FIG. 4. In various embodiments, computer system 400 may be a display driver or graphics processing unit.

As illustrated, computer system 400 includes one or more processors 410A-N coupled to a system memory 420 via bus 430. Computer system 400 further includes a network interface 440 coupled to bus 430, and one or more I/O controllers 450, which in turn are coupled to peripheral devices such as display sensors 460, accelerometers 470, instrument panel or display 480, etc. Each of I/O devices 460, 470, 480 may be capable of communicating with I/O controllers 450, for example, via a wired connection (e.g., serial port, Universal Serial Bus port) or wireless connection (e.g., Wi-Fi, Bluetooth, Near Field Communications, etc.). Other devices may include, for example, keyboards, keypads, attitude-heading sensors, air data computer, navigation systems, communication systems, etc.

In various embodiments, computer system 400 may be a single-processor system including one processor 410A, or a multi-processor system including two or more processors 410A-N (e.g., two, four, eight, or another suitable number). Processors 410 may be any processor capable of executing program instructions. For example, in various embodiments, processors 410 may be general-purpose or embedded processors implementing any of a variety of instruction set architectures (ISAs), such as the x86, PowerPC®, ARM®, SPARC®, or MIPS® ISAs, or any other suitable ISA. In multi-processor systems, each of processors 410 may commonly, but not necessarily, implement the same ISA. Also, in some embodiments, at least one processor 410 may be a graphics processing unit (GPU) or another dedicated graphics-rendering device.

System memory 420 may be configured to store program instructions and/or data accessible by processor 410. In various embodiments, system memory 420 may be implemented using any suitable memory technology, such as static random-access memory (SRAM), synchronous dynamic RAM (SDRAM), nonvolatile/Flash-type memory, or any other type of memory. As illustrated, program instructions and data implementing certain operations and modules such as those described herein may be stored within system memory 420 as program instructions 425 and data storage 435, respectively. In other embodiments, program instructions and/or data may be received, sent, or stored upon different types of computer-accessible media or on similar media separate from system memory 420 or computer system 400.

A computer-accessible medium may include any tangible and/or non-transitory storage media or memory media such as electronic, magnetic, or optical media-e.g., disk or CD/DVD-ROM coupled to computer system 400 via bus 430. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

In an embodiment, bus 430 may be configured to coordinate I/O traffic between processor 410, system memory 420, and any peripheral devices in the computer system, including network interface 440 or other peripheral interfaces, such as I/O devices 460, 470, 480. In some embodiments, bus 430 may perform any necessary protocol, timing, or other data transformations to convert data signals from one component (e.g., system memory 420) into a format suitable for use by another component (e.g., processor 410). In some embodiments, bus 430 may include support for devices attached through various types of peripheral buses, such as a variant of the Peripheral Component Interconnect (PCI) bus standard or the Universal Serial Bus (USB) standard, for example. In some embodiments, the function of bus 430 may be split into two or more separate components, such as a northbridge chipset and a southbridge chipset, for example. In addition, in some embodiments some or all the functionality of bus 430, such as an interface to system memory 420, may be incorporated directly into processor(s) 410A-N.

Network interface 440 may be configured to allow data to be exchanged between computer system 400 and other devices attached to a network, such as other computer systems, or between nodes of computer system 400. In various embodiments, network interface 440 may support communication via wired or wireless general data networks, or via any other suitable type of network and/or protocol

I/O controllers 450 may, in some embodiments, enable communications with one or more display terminals, keyboards, keypads, touchpads, scanning devices, voice or optical recognition devices, mobile devices, or any other devices suitable for entering or retrieving data by one or more computer system 400. Multiple I/O controllers 450 may be present in computer system 400 or may be distributed on various nodes of computer system 400. In some embodiments, I/O devices may be separate from computer system 400 and may interact with one or more nodes of computer system 400 through a wired or wireless connection, such as over network interface 440.

As shown in FIG. 4, system memory 420 may include program instructions 425, configured to implement certain embodiments described herein, and data storage 435, comprising various data may be accessible by program instructions 425. In an embodiment, program instructions 425 may include software elements, which may be configured to affect the operations discussed in FIGS. 1 and 2. Program instructions 425 may be implemented in various embodiments using any desired programming language, scripting language, or combination of programming languages and/or scripting languages (e.g., C, C++, C#, Java™, JavaScript™, Perl, etc.). Data storage 435 may include data that may be used in these embodiments (e.g., recorded communications, profiles for different modes of operations, etc.). In other embodiments, other or different software elements and data may be included.

A person of ordinary skill in the art will appreciate that computer system 400 is merely illustrative and is not intended to limit the scope of the disclosure described herein. The computer system and devices may include any combination of hardware or software that can perform the indicated operations. In addition, the operations performed by the illustrated components may, in some embodiments, be performed by fewer components or distributed across additional components. Similarly, in other embodiments, the operations of some of the illustrated components may not be provided and/or other additional operations may be available. Accordingly, systems and methods described herein may be implemented or executed with other computer system configurations including virtual configurations.

It should be understood that the various operations described herein, particularly in connection with FIGs. 1-3, may be implemented in software executed by processing circuitry, hardware, or a combination thereof. The order in which each operation of a given method is performed may be changed, and various operations may be added, reordered, combined, omitted, modified, etc. It is intended that embodiment(s) described herein embrace all such modifications and changes and, accordingly, the above description should be regarded in an illustrative rather than a restrictive sense.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

## Claims

1. A vehicle display, comprising:
a touch-sensitive display;
a vehicle movement sensor; and
a display driver configured to generate one or more objects displayed on the touch-sensitive display, wherein a position of at least one object on the touch-sensitive display is adjusted based upon motion detected by the vehicle movement sensor.

2. A method, comprising:
displaying one or more objects on a touch-sensitive display in a vehicle;
detecting motion of the vehicle; and
adjusting the position of at least one object on the touch-sensitive display based upon the vehicle motion.

3. The vehicle display of claim 1 or the method of claim 2, wherein the vehicle is an aircraft.

4. The vehicle display of claim 1 or of claim 3, or the method of claim 2 or of claim 3, wherein the at least one object is a virtual flight instrument.

5. The vehicle display of claim 1 or of claim 3 or of claim 4, wherein the vehicle movement sensor is an accelerometer; or
the method of claim 2 or of claim 3 or of claim 4,wherein the vehicle motion is detected by an accelerometer.

6. The vehicle display of claim 1 or of any of claims 3 to 5, further comprising:
a display sensor configured to detect a target point for an imminent input on the touch-sensitive display, wherein the display driver is configured to generate a zoomed display around the target point.

7. The vehicle display of claim 6, wherein the target point overlaps a targeted object on the touch-sensitive display, and wherein at least a portion of the targeted object is expanded on the display.

8. The vehicle display of claim 6 or of claim 7, wherein the display driver is configured to display the target point on the touch-sensitive display.

9. The method of claim 2 or of any preceding method claim, further comprising:
displaying an object on the touch-sensitive display at an initial position;
moving the object to a second position in response to the vehicle motion; and
moving the object to the original position from the second position after the vehicle motion stops.

10. The method of claim 2 or of any preceding method claim, further comprising:
detecting when a user touches the touch-sensitive display; and
providing tactile feedback to the user via a glove.

11. A method, comprising:
displaying one or more objects on a touch-sensitive display in a vehicle;
detecting an imminent input to the touch-sensitive display;
determining a target point on the touch-sensitive display for the imminent input; and
zooming the display around the target point.

12. The method of claim 11, wherein the target point overlaps a targeted object on the touch-sensitive display, and wherein a zoomed portion of the display comprises at least a portion of the targeted object.

13. The method of claim 12, wherein the vehicle is an aircraft, and wherein the targeted object is a virtual flight instrument.

14. The method of claim 11 or of claim 12 or of claim 13, further comprising:
displaying the target point on the touch-sensitive display.

15. The method of claim 11 or of any of claims 12 to 14, wherein the imminent input corresponds to an input device coming within a predefined proximity to the touch-sensitive display, and optionally or preferably wherein the input device is selected from a user finger, a user fingertip, a user hand, and a stylus.
